# EUROPEAN PATENT APPLICATION

(11) **EP 4 357 194 A1**
(43) Date of publication of application: **24.04.2024**
(21) Application number: 23201663.4
(22) Date of filing: 04.10.2023
(51) Int. Cl.: B60N 2/015, B60N 2/68

(54) **POLYMER PASSENGER SEAT CONSTRUCTION FOR A DOUBLE CABIN LIGHT COMMERCIAL VEHICLE**

(30) Priority: 17.10.2022 NL 2033328
(71) Applicant: Snoeks Automotive B.V., 2153 NC Nieuw-Vennep (NL)
(72) Inventor: Cappendijk, Johannes Mattheus, 2153 NC Nieuw-Vennep (NL)
(74) Representative: Arnold & Siedsma

(57) **Abstract**

The present invention relates to a polymer passenger seat construction for a double cabin light commercial vehicle of N category, wherein said seat construction is comprised of a backrest part, a seating part and a support part comprised of polymer material, and wherein the seat construction is capable of absorbing rear, front and side impact forces exerted on the passenger seat construction during a collision. The present invention further relates to a double cabin light commercial vehicle comprising said passenger seat assembly.

## Description

The present invention relates to a polymer passenger seat construction for a double cabin light commercial vehicle of N category, wherein said seat construction is comprised of a backrest part, a seating part and a support part comprised of polymer material, and wherein the seat construction is capable of absorbing rear, front and side impact forces exerted on the passenger seat construction during a collision. The present invention further relates to a double cabin light commercial vehicle comprising said passenger seat assembly.

Small delivery vans or trucks, also known as light commercial vehicles, are transport vehicles that are being used to transport cargo. Such vehicles are also known in the art as N category vehicles. These vehicles (or vans) can be comprised of a double cabin construction wherein one part of the van is a passenger compartment, and the other part is a cargo compartment, and wherein these compartments are being separated by a separation wall separating the cargo from the passengers. These so-called double cabin vehicles may serve to transport goods and at the same time transport a limited number of people. The passenger compartment contains at least two passenger seat assemblies, whereby the front seat assembly is provided for the driver and possibly one or two additional passengers. The rear seat(s) are arranged to be able to further transport three or four passengers, depending on the lay-out of the vehicle. Factory supplied seating constructions are fixed to the floor body of the van for support of the seating, retaining the seats and passengers during an accident, and further durability of the seating construction.

Regulatory acts for motorized vehicles seek to ensure a high level of road safety. In Europe, motor vehicles are categorized in several categories, of which M and N are the most commercially important categories. Category N are considered motor vehicles with at least four wheels designed and constructed for the carriage of goods and having a maximum mass not exceeding 3.5 or 7.5 tonnes, in view of the N1 or N2 category respectively (i.e. small delivery vans or trucks, also known also light commercial vehicles). The difference between N1 and N2 depends on the load capacity regulations. Category M are considered motor vehicles with at least four wheels designed and constructed for the carriage of passengers and comprising no more than eight seats in addition to the driver's seat (i.e., regular passenger cars including SUVs, MPVs, small vans, etc). The possibility to add an additional row of seats in a N (including N1 or N2) category delivery vehicle coincides with the additional and stricter safety requirements and demands coming from the market to ensure the safety of the passengers, than normally is required for N vehicles. N class vehicles may under strict circumstances transport up to seven persons. Especially in safety regulations for delivery vans or light commercial vehicles there are large differences to comply with between transportation that is more focussed on cargo (i.e. N regulations) and transportation that is more focussed on people (i.e. M regulations). Safety regulations are much stricter for vehicles in the M category than in the N category, since M is focussed on the transport of persons instead of transportation of goods/services. To obtain an "M approval" for a seating construction in an N class (N1 or N2) vehicle, the entire vehicle should meet a series of EU directives, regulation and testing requirements. M vehicles therefore have reinforced floor parts, pillars and posts and all comprise mounting points for passenger seats and safety belts. In M vehicles these seats are attached to the reinforced floor and a large part of the safety belt systems are attached to the reinforced pillars. In contrast N vehicles do not comprise reinforced floors or pillars and are not accommodated for additional passenger seats or safety belts (other than the front row seating). To achieve M approval of a seat in a vehicle, the seat must not only be tested as an individual unit, but also as a complete full system installed in the N1 vehicle which you intend to fit the seats into. Furthermore, these back seat assemblies must be capable of absorbing the large forces that occur in case of a collision and be tested in dynamic force crash tests.

Passenger seat constructions are generally heavy constructions that are securely fastened, often bolted, to reinforced sections of the body floor of a light commercial vehicle, such as a van. Current double cabin seat constructions are comprised mainly (~90%) of metal and hard plastics such as styrene, more specifically acrylonitrile butadiene styrene (ABS), high density polyethylene (HDPE) and PET to provide the needed strength and robustness in case of high-speed impact collisions. Furthermore use is made of thermoplastic olefin (TPO), which is a heavy material for use in the seat construction. Due to the use of such highly impact resistant materials the present seat constructions are heavy, require high energy production processes and high costs to produce. Although such a construction is very strong in a forward direction, it provides limited safety protection in side or rear impact collisions, and is therefore unsuitable to cope with the large forces and dynamic impact as the result of such collisions. Therefore, light commercial vehicles (of N1 or N2 class) comprising a double cabin at present do not comply with M safety regulation to ensure, in the addition of transportation of goods, the safe transportation of multiple persons. Furthermore, the use of several types of hard plastics in combination with metals and its many components (+25 different parts), provides a product that is difficult to recycle or reuse, increasing the carbon footprint of the production of such seat constructions when the lifetime of the vehicle is expired.

Considering the above, there is a need in the art for the provision of a simple, light weight and cost-effective passenger seat construction that is suitable for a double cabin light commercial vehicle, preferably of N class (N1 or N2), which meets the technical requirements and safety regulations to transport both cargo and up to seven passengers, according to M safety requirements. The seat assembly should have an improved carbon footprint, i.e. using less, lighter and recyclable materials, consuming less energy during production, while maintaining the safety standards, and integrity of the vehicle during crash, and provide also an optimal look and feel for the user. Furthermore, there is a need for a seating construction suitable for double cabin light commercial vehicle that provides improved safety protection in front impact, but more specifically side or rear impact collisions and is able to cope with the large forces and dynamic impact as the result of such collisions.

It is an object of the present invention, amongst other objects, to address the above need in the art. The object of present invention, amongst other objects, is met by the present invention as outlined in the appended claims.

Specifically, the above object, amongst other objects, is met, according to a first aspect, by the present invention by a polymer passenger seat construction for a double cabin light commercial vehicle of N1 or N2 category, wherein said seat construction is comprised of a backrest part, a seating part and a support part supporting the seating part forming a seat construction, the support part being arranged between the seating part and the floor portion of the vehicle, wherein the seat construction is comprised of at least 80%, more preferably at least 85%, more preferably at least 90% of expanded polypropylene (EPP), based on the total of materials comprising the passenger seat construction, wherein said construction is capable of absorbing rear, front and side impact forces exerted on the passenger seat construction during a collision according to ECE crash tests (e.g. R14, R94, R17, R95, R11 ECE tests, preferably R14). The passenger seat assembly is comprised of light weight highly versatile closed-cell bead foam material that is expanded, more specifically expanded polypropylene (EPP), which provides a unique range of properties. Important safety improving properties include outstanding energy absorption, compression resistance, exceptionally high strength to weight ratio, the EPP material is lightweight in relation to impact resistance, anti-static, electrical insulating, high flame retardancy, and highly resistant to material degradation over time. Other properties of the material in relation to the seat construction comprised of the EPP material are thermal insulation (hot and cold), water and chemical resistance. Restriction of Hazardous Substances (RoHS) compliance, colourfast, odourless, easy to clean and keep clean, non-toxic (food grade), and 100% recyclability. The EPP based seating construction can replace the known hard plastic, steel and/or metal-based passenger seat constructions, providing a passenger seat assembly that is lightweight, reduces contact sounds and realizes less assembly steps in comparison to the known metal seating constructions.

Safety and crash test simulations according to ECE R14 show that the passenger seat construction of present invention perform at least equally or even outperform the standard steel metal and hard plastic seat constructions. The EPP based passenger seat construction of present invention showed to be highly crash resistant and that the current safety regulations are met. The passenger seat construction of present invention was tested for impact dampening and showed that it can resist a very high pressure-force. The impact on occupants was also monitored and was shown that the impact is partially absorbed by the EPP seat construction in the event of a crash. No damage to the vehicle body floor and therefore no impact on the battery in the case of electric vehicles was detected. EPP material is very shock absorbing over a relatively short period of time.

According to a preferred embodiment, the present invention relates to the polymer passenger seat construction, wherein the EPP has a density of between 40 to 250 kg/m3, preferably between 60 to 150 kg/m3, more preferably between 70 to 100 kg/m3. Safety tests show that in case the EPP based seat construction, comprised of EPP having a density of above 40, more preferably above 60 kg/m3 is considered as safe. In case the EPP density becomes too high (i.e. above 250 kg/m3), the EPP material becomes very heavy resulting in an undesirable heavy seat construction. EPP can be produced i n a wide range of densities. This results in EPP products with different densities that offer different compressive strengths and hardness's. By adjusting the density, the properties can be tuned to have the required compressive strength, hardness's or dampening ability and to provide for a light weight, high performance seat construction that is comprised for at least 80% of EPP, preferably at least 85%, more preferably at least 90%. The compression strength of the product is regulated by the density used in the product. The higher the density, the higher the hardness of the part. Especially the support or carrier part between the passenger and the floor of the vehicle is of EPP material weight carrying portion of the seat construction.

According to yet another preferred embodiment, the present invention relates to the polymer passenger seat construction, wherein the EPP comprising the seating part and EPP comprising the support part of the seat construction differ in density, preferably wherein the EPP density of the seating part is lower than the EPP density of the support part. Preferably, certain sections of the passenger seat construction, such as the seating surface area, the EPP material can have a different density than the rest of the seat construction, providing a more softer look and feel for the user on the seating part of the construction.

The passenger seat construction according to present invention is preferably produced by providing (injecting) EPP foam beads into moulds together with polypropylene resin. During the production process to obtain different density of the EPP material, "sliders" are being used in the mould. The mould is filled and before steaming, the sliders will be removed so the beads will melt together. Compared to the known steel, metal and hard plastic seat constructions, the passenger seat construction of present invention comprised of EPP, construction costs are higher mainly due to the mould costs. However, the benefits in view of construction and material properties are considerable. The use of the EPP material in the passenger seat construction of present invention also offers many design possibilities, i.e. a smooth or grained surface and look and feel, in comparison to the metal seat construction. The polymer material has a comfortable touch and feel.

The passenger seat assembly of present invention can be mounted in a light commercial vehicle of N category (N1 or N2), without the need to further reinforce floor parts or reinforced connection point in the floor of the vehicle, or to use specific adaptors to mount the assembly to the floor of the vehicle. The passenger seat assembly is resting on the floor surface of the vehicle and can be connected to the body side walls or C (or D) posts of the vehicle. In this case the N vehicle comprises the passenger seat assembly of present invention, which complies to the safety requirements of M category, i.e. the passenger seat assembly is of M category. The assembly of present invention is simple, sustainable, cost effective and light weight, and provides for retention of the entire seat construction together with their occupants without the need for firm and direct anchorage to the floor portion of the vehicle.

The passenger seat assembly of present invention further comprises one or more, preferably three, more preferably four safety seat belt construction(s), preferably one or more three-point or five-point safety belt construction(s), attached to the seating construction only, and not to the body or to the C or D pillars of the vehicle itself. This also means that during a collision, the forces exerted on the safety belts holding the passengers are absorbed by the seating construction and diverted towards the vehicle and must withstand forces that occur in case of a collision, without risk of collapse of the passenger seat assembly.

According to another preferred embodiment, the present invention relates to the polymer passenger seat construction, wherein the seat construction is comprised of a total of at most 15 parts, preferably at most 10 parts, more preferably at most 5 parts, even more preferably 1 part. The number of components in the seat construction of the present invention is strongly reduced, using at most only 15 components, in comparison to the about 30 or more components comprised of hard plastic and metals used in the current seat construction for double cabin vehicles. This reduction results in an overall simplification of the seat construction and a reduced weight of the seating construction of present invention, in comparison to the known current seat constructions. Furthermore, the production of the seating construction of the present invention due to less components and a reduced variety of materials (mainly EPP) being used, results in reduced scrap or waste, reduced industrial and logistical emissions and thus increased sustainability of the end product. The passenger seat construction in preferably comprised of 5 to 6 parts, making up the whole seating construction. However, it may be envisaged that the seat construction is produced via the injection moulding technology in a single shot, i.e. producing a seating construction from a single part.

The seating construction of present invention, more specifically the support part supporting the seating part may comprise storage compartments within the EPP construction of the support part, which can also serve as cooling compartments due to the insulation properties of the EPP. The backrest part can be further comprised of arm- and/or headrest(s) of EPP. The soft foam present in known steel/hard plastic seating constructions, i.e. in the seating and head rest part for comfort, can also be (in part) replaced by EPP due to the soft look and feel of the EPP material depending on the density of the EPP used. Finally, the back seat part of EPP can also function as a separation wall preventing the cargo from moving towards the passenger section of the double cabin light commercial vehicle of N1 or N2 category for transporting cargo and passengers according to ISO27956 regulations.

According to another preferred embodiment, the present invention relates to the polymer passenger seat construction, wherein the support part of the seat construction is for at least 95% of EPP, more preferably 100% of EPP. The support part of the seat construction is in connection with the floor of the vehicle. Crash tests have shown that a EPP support part provides a much-improved outcome in view of maintaining the integrity of the vehicle floor, no deformations or displacement or damage to the floor was observed. In contrast, ECE R14 force tests using a regular seating construction such damages were observed. The seating construction of present invention was able to absorb the exerted forces, resulting in an intact floor construction of the vehicle.

According to yet another preferred embodiment, the present invention relates to the polymer passenger seat construction, wherein the seating part of the seat construction is for at least 95% of EPP, more preferably 100% of EPP.

According to a preferred embodiment, the present invention relates to the polymer passenger seat construction, wherein the seat construction further comprises inserts, such as metal wiring, embedded into the EPP material. The production process furthermore provides the ability to add inserts into the mould. Inserts can be metal wiring to stiffen or reenforce the part, or fastening means or parts like screw inserts or Velcro to attach the seating construction to the vehicle. After releasing the part from the mould, the product will be dried in an oven to get the required dimensions of the part. Moist or steam will be deducted from the part.

According to another preferred embodiment, the present invention relates to the polymer passenger seat construction, wherein the seat construction is fully recyclable. The passenger seat construction according to present invention is preferably produced by providing (injecting) EPP foam beads into moulds together with polypropylene resin. Using a steam chest moulding process, wherein pressure and steam heat is applied to the EPP foam beads to fuse the beads into the final product form, resulting in a strong and lightweight seat construction. Extruded pellets expand to become consistently shaped beads of expanded polypropylene foam. The production of the polymer seating construction of present invention leaves a relatively low carbon footprint in comparison to the steel or metal passenger seat constructions. The EPP material of which the seat construction is comprised, is completely and infinitely recyclable (100%), providing a material that is highly sustainable, uses less energy consumption and produces almost no waste material from the production process.

According to another preferred embodiment, the present invention relates to the polymer passenger seat construction, wherein the seating construction provides seating for at least two seats, preferably at least three seats, more preferably at least four seats. The passenger seat assembly complies with M regulations for vehicles designed and constructed for the carriage of passengers comprising at most seven seats in addition to the driver's seat (i.e. regular passenger cars including SUVs, MPVs, small vans, etc.).

The present invention, according to a second aspect, relates to a double cabin light commercial vehicle of N1 or N2 category for transporting cargo and passengers comprising a passenger seat construction as disclosed herein. The double cabin light commercial vehicle is a vehicle of N category (N1 or N2) that comprises the polymer passenger seat construction of present invention, which complies to the safety requirements of M category, i.e. the passenger seat assembly is of M category. The M and N categories are further disclosed in Regulation (EU) 2018/858. The inclusion of the lightweight polymer passenger seat construction in a double cabin light commercial vehicle, the vehicle will also become lighter, which is very beneficial in view of fuel economy/electrical efficiency. Furthermore, next to a seating construction providing seating space for passengers it is important that the vehicle is comprised of a separation between cargo space and the passenger space. In general, this is often accomplished by using an separation wall between the passenger and cargo space. However, in the present invention the back seat part and support part comprised of EPP of the seating construction in large part also function as a "separation wall" preventing the cargo from moving towards the passenger section of the double cabin light commercial vehicle of N1 or N2 category for transporting cargo and passengers.

According to a preferred embodiment, the present invention relates to the double cabin light commercial vehicle wherein the vehicle, in the addition of transportation of cargo and goods, is also suitable for the transportation of at least 5, more preferably at least 6, most preferably at least 7 persons and/or wherein said vehicle is suitable for the carriage of cargo and goods having a maximum mass of at least 1 ton, more preferably at least 2 ton, most preferably at least 3.5 ton, even more preferably at least 5 ton, most preferably at least 7.5 ton.

According to a preferred embodiment, the present invention relates to the double cabin light commercial vehicle, wherein said vehicle is an electric or hybrid electric powered vehicle. The construction of electric/hybrid vehicles that have their battery packs often located within the floor construction. These vehicles have large batteries mounted beneath the passenger/load area floor. Damage to the floor could result in damage to this battery pack which could lead to dangerous situations. Damages to the floor is therefore no longer acceptable. Crash tests in the polymer seating construction of present invention in N category double cabin light commercial vehicles showed that at high impact the floor of the vehicle remains intact, thereby protecting the batteries located underneath the floor of an electrical N1 or N2 vehicle. The seating construction of present invention provides an improved safety in comparison to the known heavy steel, hard plastic seating constructions, because the EPP material of which the seating construction is comprised of is able to absorb to a large extend the forces which are exerted onto the passenger and passenger seat during a collision.

The present invention will be further detailed in the following example and figures wherein:

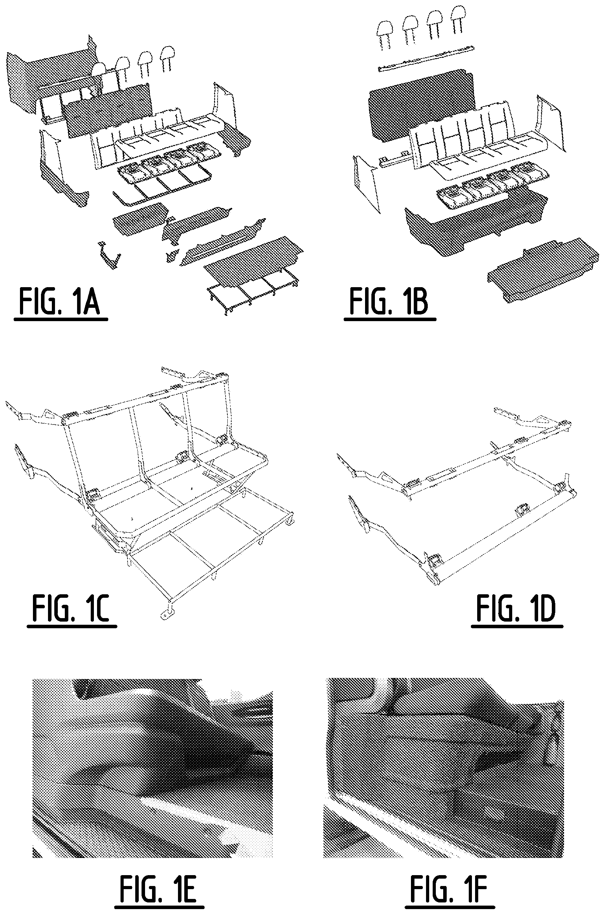

- **Figure 1:**: shows schematically a seating construction comprised of steel and hard plastics composnents (1A, 1C and 1E) in a double cabin light commercial vehicle and a seating construction according to an embodiment of the present invention (1B, 1D and 1F). Furthermore the seating construction of present invention is simplified, the number of elements of the seating construction of present invention is strongly reduced (black components in Figure 1A, 1B), the steel construction is strongly reduced (figure 1C vs. 1D), wherein the components of the seating construction shown in 1A, and 1E are comprised of hard plastics and steel, whereas the components of 1B and 1F are mainly comprised of EPP. The seating construction of the present invention is in accordance with to the high safety standards and provides a significantly simpler and lighter construction, comprised of a reduced number of parts of lightweight EPP material.

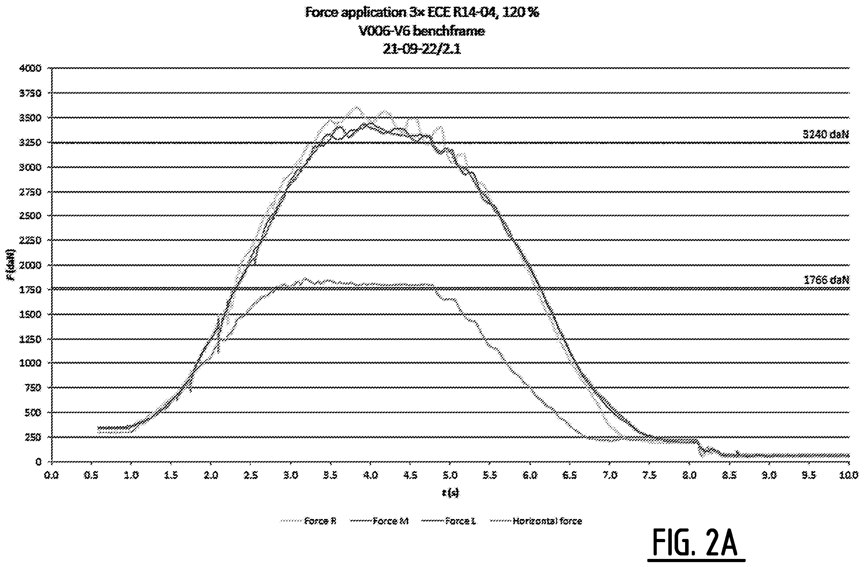

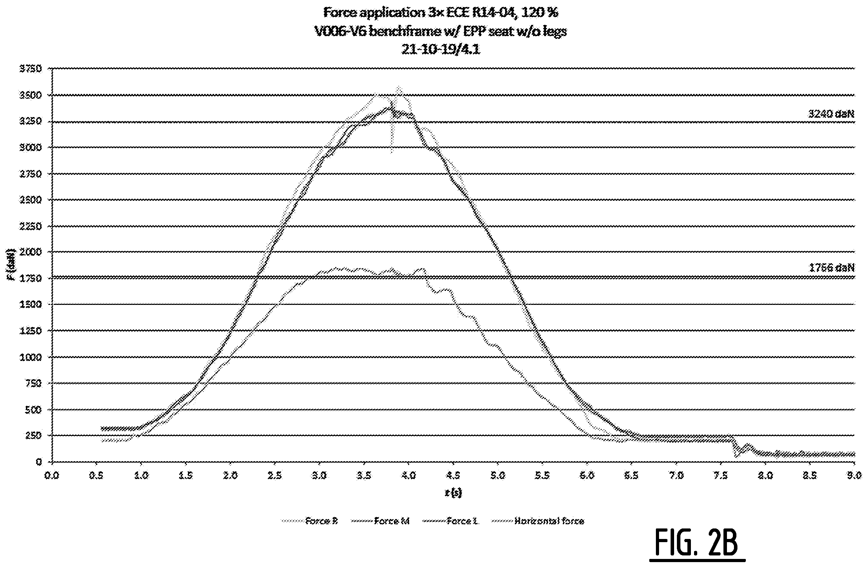

- **Figure 2:**: Shows the ECE R14 force, time-diagrams for a regular steel seating construction (A) and the seating construction of present invention (B). During an ECE R14 test, on each seat a force of 2700 daN is applied on the belt(s) of the seat(s). In the graphs these forces are labelled as force R (right seat), M (middle seat) and L (left seat). In addition, a force equal to 20 times the weight of the seat construction is applied on the frame (labelled as horizontal force). Tests A and B have been performed with 20% higher forces to prove the strength of the construction. ECE R14 requires that the seat can withstand the required forces without getting fully detached from the vehicle. Both constructions meet this requirement. The peaks in the curves show that the steel frame suffers more minor fractures and more deformations than the construction of present invention comprised of EPP.

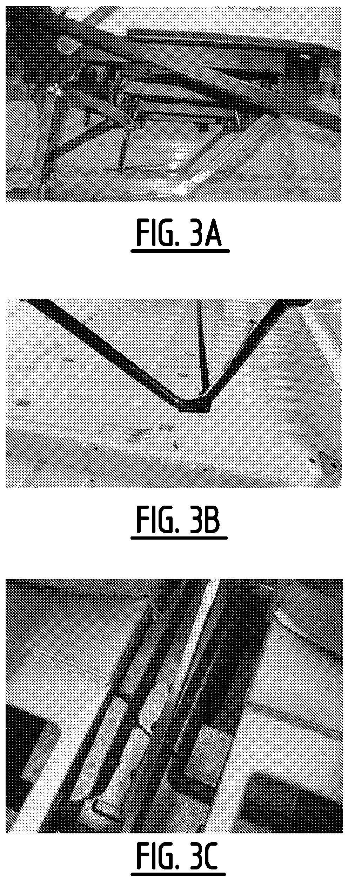

- **Figure 3:**: Shows deformation (A) and displacement (B) and damages to the floor construction of N1 double cabin light commercial vehicles after the ECE R14 force tests using a regular seating construction comprised of a steel construction. Such damages were not observed with the polymer seating construction of present invention (C), which was able to absorb the exerted forces, resulting in an intact floor construction of the vehicle.

### Example

### Static crash simulation EPP seat construction

To comply with European M requirements, dynamic forward and backward testing have been performed. The ECE R14 test was carried out to test the safety of the seating assembly of present invention to test leads that represent a vehicular impact. High forces are applied to the construction, and are sustained over a period of time, to simulate crash loads on the seating construction.

A traction machine loads the seat with 1350 kg on each belt section, while the seat is exposed to a static load of 20 x weight of the seat in the anchorage points. The seat system is loaded with a total of approx. 9.5 ton, and must be able to keep the load 0.2 sec. without breaking, to be approved. A passenger seat of a regular steel bench frame and the passenger seat construction of present invention were tested.

Both the regular steel bench frame and the passenger seat construction of present invention passed this test (Figure 2A and 2B, respectively). The deformation of the seating construction was monitored at the point of the upper safety belt attachment points, during an ECE R14 test. To even further test the safety of the construction of both assemblies, the test was performed on both seating assemblies wherein the load was increased to 35000 N per seat (more than 120% of the force according to ECE R14), monitoring the forward displacement of the left, right and middle sections of the seating construction due to the force exerted. An upcoming point of attention is in view of the construction of electric/hybrid vehicles that have their battery packs often located within the floor construction. These vehicle have large batteries mounted beneath the passenger/load area floor. Damage to the floor could result in damage to this battery pack which could lead to dangerous situations. Damages to the floor are therefore no longer acceptable. Results of the crash tests show displacement and heavy damage to the floor section of the regular seating construction (Figure 3A and 3B) at 35000N tests. The regular construction, although passing the safety tests for the construction per se, did not pass the safety requirements in view of the integrity of the floor in view of future electric and safety requirements involved. In contrast to the seating construction of the present invention, at such high impact collisions, it greatly improves the safety of the construction (Figure 3C), showing no heavy damage to the floor construction. With this EPP structure such damages to the floor no longer occur since it absorbs more force due to its composition and distributes the force better across the floor during a crash situation. The force was completely absorbed by the highly versatile closed-cell bead foam material of the seating construction of present invention.

## Claims

1. A polymer passenger seat construction for a double cabin light commercial vehicle of N1 or N2 category, wherein said seat construction is comprised of a backrest part, a seating part and a support part supporting the seating part forming a seat construction, the support part being arranged between the seating part and the floor portion of the vehicle, wherein the seat construction is comprised of at least 80%, more preferably at least 85%, more preferably at least 90% of expanded polypropylene (EPP), based on the total of materials comprising the passenger seat construction, wherein said construction is capable of absorbing rear, front and side impact forces exerted on the passenger seat construction during a collision according to ECE R14 crash tests.

2. Polymer passenger seat construction according to claim 1, wherein the EPP has a density of between 40 to 250 kg/m3, preferably between 60 to 150 kg/m3, more preferably between 70 to 100 kg/m3.

3. Polymer passenger seat construction according to claim 1 or 2, wherein the EPP comprising the seating part and EPP comprising the support part of the seat construction differ in density, preferably wherein the EPP density of the seating part is lower than the EPP density of the support part.

4. Polymer passenger seat construction according to any one of the claims 1 to 3, wherein the seat construction is comprised of a total of at most 15 parts, preferably at most 10 parts, more preferably at most 5 parts, even more preferably 1 part.

5. Polymer passenger seat construction according to any one of claims 1 to 4, wherein the support part of the seat construction is for at least 95% of EPP, more preferably 100% of EPP.

6. Polymer passenger seat construction according to any one of claims 1 to 5, wherein the seating part of the seat construction is for at least 95% of EPP, more preferably 100% of EPP.

7. Polymer passenger seat construction according to any one of claims 1 to 6, wherein the seat construction further comprises inserts, such as metal wiring, embedded into the EPP material.

8. Polymer passenger seat construction according to any one of claims 1 to 7, wherein the seat construction is fully recyclable.

9. Polymer passenger seat construction according to any one of the claims 1 to 8, wherein the seating construction provides seating for at least two seats, preferably at least three seats, more preferably at least four seats.

10. A double cabin light commercial vehicle of N1 or N2 category for transporting cargo and passengers comprising a passenger seat construction according to any one of claim 1 to 9.

11. Double cabin light commercial vehicle according to claim 10, wherein the vehicle, in the addition of transportation of cargo and goods, is also suitable for the transportation of at least 5, more preferably at least 6, most preferably at least 7 persons.

12. Double cabin light commercial vehicle according to claim 10 or 11, wherein said vehicle is suitable for the carriage of cargo and goods having a maximum mass of at least 1 ton, more preferably at least 2 ton, most preferably at least 3,5 ton.

13. Double cabin light commercial vehicle according to any one of the claims 10 to 12, wherein said vehicle is an electric or hybrid electric powered vehicle.
